**Europäisches Patentamt**

**European Patent Office**

**Office européen des brevets**

(19)

(11) Veröffentlichungsnummer: **0 119 672**
**A1**

# (12) EUROPÄISCHE PATENTANMELDUNG

(21) Anmeldenummer: **84200451.7**

(22) Anmeldetag: **13.03.84**

(51) Int. Cl.³: **A 23 G 3/26,** F 16 C 13/02,
F 16 C 23/08

(30) Priorität: **19.03.83 DE 3310031**

(43) Veröffentlichungstag der Anmeldung: **26.09.84**
**Patentblatt 84/39**

(84) Benannte Vertragsstaaten: **IT**

(71) Anmelder: **DRIAM Metallprodukt GmbH & Co. KG,**
**Aspenweg 19, D-7991 Eriskirch (DE)**

(72) Erfinder: **Dunajtschik, Rudolf, Flurstrasse 20C,**
**D-8990 Lindau-Bodolz (DE)**

(74) Vertreter: **Braito, Herbert, Dipl.-Ing.,**
**Postfach 1140 Martin-Luther-Strasse 1,**
**D-7950 Biberach/Riss 1 (DE)**

(54) **Dragiervorrichtung mit Dragiertrommel.**

(57) Die von einer Antriebsvorrichtung (3) in Rotationsantrieb versetzbare Dragiertrommel (2) ist durch einen Strömungsverteiler (4) mit zwischen dem trommel-festen drehbaren Teil (23) und dem undrehbaren Teil (25) angebrachten Übergangsdichtungen (26, 32) an Saug- und Druckanschluss eines Gebläses angeschaltet. Auf der Grundplatte (11) des Maschinenrahmens (1) ist die Dragiertrommel (2) mittels Lagerständern (14, 16) durch das Loslager (15) und das Festlager (17) gelagert. Beide Lager weisen eine durch ein leichtes Wälzlager zu bildende Drehverbindung auf, die an einen allseitig dreheinstellbaren Träger (43, 45) angeschlossen ist. An einem kardanisch gehaltenen Ringteil zum Festlager (17) ist über eine Scheibe (69) der äussere Teil (25) des Strömungsverteilers (4) angeschlossen. Es wird so die Schrägstellung der Trommelnaben (36, 57) bei langen und hochbelasteten Dragiertrommeln kompensiert. Die Trommel kann entsprechend leicht gebaut sein, und es ist auch an der Übergangsfläche des Strömungsverteilers (4) ein ggf. gasdichter Abschluss gewährleistet. Dies ermöglicht grosse Dragierleistungen mit preiswerten Trommeln, auch im Umluftbetrieb, insbesondere innerhalb des die Trommel ringsum abschliessenden Gehäuses.

ACTORUM AG

0119672

1. März 1984/s
8 D 2776

DRIAM Metallprodukt GmbH & Co. KG
Aspenweg 19
D-7991 Eriskirch

Dragiervorrichtung mit Dragiertrommel

Die Erfindung betrifft eine Dragiervorrichtung zum Beschichten von Granulaten wie Drageekerne mit einer vielschichtigen Umhüllung, mit einer vorzugsweise um eine waagerechte Achse in zwei axial zueinander versetzten Drehlagern gehaltenen Dragiertrommel.

Bei einer bekannten Dragiervorrichtung dieser Art sind größere Dragiertrommeln meist über Kranzlagerungen gehalten, d. h. am Trommelumfang sind zu beiden Enden hin zwei Ringschienen angebracht, die auf bodenfesten Lagerrollen drehbar gelagert sind. Der Betrieb solcher Trommeln ist jedoch mit verschiedenartigen Nachteilen verbunden. Einmal bringt der Umlauf ständige Erschütterungen mit sich, was eine ungleichmäßige Beschichtung zur Folge hat. Da zudem die Durchlaufgeschwindigkeit an der Lagerstelle zufolge des großen Trommeldurchmessers verhältnismäßig hoch liegt, ist der Trommelbetrieb mit ständigen Lärmstörungen verbunden.

Um dem abzuhelfen, wurden kleinere Trommeln von einem Ende her fliegend getragen (DE-OS 28 05 801), wobei an der gegenüberliegenden Trommel-Stirnseite eine verschließbare Einfüllöffnung angebracht wurde. Damit sind hinsichtlich Beladen und Entladen verschiedene Vorteile verbunden, und

0119672

kann
die Lagerung/mit zwei hier unter verhältnismäßig kleinem Abstand voneinander angebrachten Wälzlagern bewältigt werden, ohne daß dort wesentliche Axialkräfte oder Kippmomente aufzunehmen waren.

Bei dem Bestreben, die spezifischen Bearbeitungs- bzw. Herstellungskosten von Dragees und vergleichbaren pharmazeutischen und Süßwaren immer weiter zu senken, kommen in neuerer Zeit immer mehr Großtrommeln zur Anwendung, die an beiden Stirnenden in einem Drehlager gehalten werden müssen (DE-OS 31 31 808). Da sich die Abrolleffekte, die Lagerhöhe, Trocknungswirkung und verschiedenes mehr mit dem Trommeldurchmesser ändern, wird auch die Trommellänge entsprechend groß gewählt. Dies hat bei vernünftiger wirtschaftlicher Bauweise bzw. Leichtbauweise der Trommel eine Durchbiegung zur Folge, d. h. die seitlich an die Trommel angeformten Rohrstutzen bzw. Lagernaben werden zur Waagerechten schräggestellt. Mit Gleitlagern werden dort ebenso wie mit normalen Wälzlagern zu hohe Kantendrücke erzielt, und der Einsatz etwa von Pendelrollenlagern wird dort zu teuer. Andererseits ist die Verwendung von Wälzlagern aus Gründen der Minderung des Drehwiderstandes und der Verbesserung der hygienischen Bedingungen bevorzugt.

Die Erfindung geht aus von der eingangs geschilderten Dragiervorrichtung und verfolgt die Aufgabe, diese Vorrichtung auf möglichst einfache Weise so weiterzubilden, daß die Kosten der Lagerung und die aufzunehmende axiale und Kantenbelastung verringert werden und die Lebensdauer der Lager gesteigert wird.

Zur Lösung dieser Aufgabe wird erfindungsgemäß wenigstens eines der beiden Drehlager als in Form eines leichten Wälzlagers gestaltete Drehverbindung ausgebildet, die an einen allseitig dreheinstellbaren Träger angeschlossen ist.

0119672

Zum Unterschied von teureren Pendelrollenlagern u. dgl. erfolgt hier die Einstellbarkeit nicht an der Wälzfläche selbst, sondern das Wälzlager mit Innen- und Außenring bleibt unverändert und wird nur durch den Anschluß eines seiner beiden Ringe an den allseitig dreheinstellbaren Träger von Kräften entlastet. Aus dem Trommelbetrieb ergeben sich jedoch nur vernachlässigbar kleine Axialkräfte, so daß man die einzusetzenden Lager nach der reinen Radialbelastung bemessen kann. Man benötigt daher bestenfalls einfache Schulterkugellager bzw. ganz normale Rillenkugellager. Tatsächlich kommt man mit dem aus, was die Fachwelt schamhafterweise als "Drehverbindung" bzw. "Papierlager" bezeichnet. Die damit erzielte Kostenersparnis ist so erheblich, daß sie auch von einer sehr sorgsamen Dreheinstellführung nicht aufgebraucht werden kann.

Wenigstens das als Festlager eingesetzte Drehlager kann daher mittels zweier sich kreuzender Schwenkachsen kardanisch aufgehängt werden. Bei der Bemessung dieser Aufhängung ist wiederum nahezu ausschließlich die zu übertragende Auflagekraft maßgeblich, was von selbst schon eine so stabile Bemessung erfordert, daß die geringen Axialkräfte zuverlässig mitübertragen werden können.

Das kardanisch aufgehängte Drehlager wird dann zweckmäßigerweise dicht am Trommelantrieb angeordnet, während das am anderen Trommelende vorgesehene zweite Drehlager wenigstens einen nachgeschalteten Anschlußteil aufweist, demgegenüber das Trommelende allseitig schwenkeinstellbar und längsverschiebbar gehalten ist.

Auch am Loslager muß eine Schwenkeinstellbarkeit und eine selbsttätige axiale Einstellbarkeit vorgesehen werden, aber praktische Bedeutung erhält diese Verschiebbarkeit kaum, da sie ebenso wie geringe Axialkräfte nur dann eintreten

- 4 -

0119672

kann, wenn sich durch Temperaturunterschiede zwischen der Trommel und der Umgebung bzw. eines die Trommel tragenden Rahmens oder einer Grundplatte ausgelöst werden. Solche Temperaturunterschiede können praktisch nur in den Betriebspausen aufkommen. Da jedoch große Trommeln - von schnell zu bewerkstelligenden Entlade- und Beladevorgängen einmal abgesehen - für Dauerbetrieb eingerichtet sind, behält das Loslager seine einmal eingenommene Axialstellung im Betrieb ständig bei.

Bei einer bevorzugten Ausführungsform der Erfindung umfaßt die kardanische Aufhängung einen äußeren Kardanrahmen, der über zwei gleichachsige Gelenkzapfen um eine erste Schwenkachse in einem ortsfesten Träger gehalten ist und um eine zur ersten senkrechte zweite Schwenkachse schwenkeinstellbar einen inneren Kardanring trägt, der mit dem äußeren Wälzlagerring verbunden ist. Der innere Kardanring kann dann also im Prinzip direkt auf einer Trommelnabe sitzen.

Zweckmäßigerweise werden zwischen dem inneren Kardanring und der Dragiertrommel Stütz- bzw. Kupplungsmittel zum unmittelbaren Abstützen bzw. Feststellen der Trommel in ihrer Drehlage vorgesehen, was für Entlade- und Beladevorgänge, für Gesamt-Reinigungsvorgänge, vor allem aber für Montagevorgänge von Bedeutung sein kann.

Dies läßt sich verhältnismäßig einfach dadurch erreichen, daß in der zweiten (inneren) Schwenkachse wenigstens ein den äußeren Kardanrahmen und den inneren Kardanring durchsetzender Gelenkbolzen bis zum Eingriff in eine Kupplungsaussparung an der Trommelnabe radial verstellbar vorgesehen wird. Beispielsweise kann der in der lotrechten Gelenkachse unten vorgesehene Gelenkbolzen mit Gewindeeingriff zentriert im inneren Kardanring gehalten werden. Auf diese Weise läßt sich z. B. das Trommelende ohne Einsatz

0119672

eines gesonderten Hebezeuges etwas anheben, um das Lager zu entlasten, um dadurch dessen Austausch und z. B. das Auswechseln einer Antriebsscheibe zu erleichtern. Bei solchen Ausführungen wird dann die Feststellung von Hand bewerkstelligt. Statt des Gewindeeingriffs kann allerdings auch eine Kraftbetätigung - etwa durch einen Druckmittelzylinder-vorgesehen und u. U. im Betriebszyklus vorgegeben selbsttätig gesteuert werden.

Ein weiteres Problem ergibt sich bei Dragiervorrichtungen, bei welchen Trocknungsluft in einem Strömungsverteiler durch eine Übergangsfläche zwischen an der Trommel vorgesehenen Strömungskanälen und gehäusefesten Anschlüssen geführt wird. An dieser Übergangsfläche können beim Durchbiegen der Trommel entsprechend der Neigung der Lagerachse zur theoretischen Mittelachse Abweichungen zwischen den dort zueinander geführten Vorrichtungsteilen entstehen, was neben Undichtigkeiten auch Verschleiß und späteren Betriebsausfall zur Folge haben kann.

Um dem abzuhelfen, werden erfindungsgemäß die undrehbar angeordneten Teile des Strömungsverteilers wenigstens mittelbar in der Übergangsfläche zur Trommel dieser gegenüber selbsttätig einstellbar geführt. Dies läßt sich auf verhältnismäßig einfache Weise dadurch bewerkstelligen, daß die undrehbaren Teile des Strömungsverteilers an dem undrehbaren, selbsttätig zur Trommel einstellbaren Teil eines Trommellagers, insbesondere des Festlagers, angeschlossen sind. Bei einer Schrägstellung der Achse der zugehörigen Trommelnabe in Folge einer Durchbiegung im mittleren Trommelteil werden somit die undrehbaren Teile des Strömungsverteilers, die ohnehin irgendwie gegen eine Mitdrehung gehalten werden müssen, in der Schrägstellung der Achse nachgeführt, was sich in einer Schrägstellung der Übergangsfläche auswirkt. Im Prinzip ist es so möglich, den

0119672

undrehbaren Teil des Strömungsverteilers lediglich mit Randdichtungen der Strömungskanäle am drehbaren Teil anzuschließen, ihn im übrigen aber völlig freischwebend zu halten, ohne daß mechanische Berührung an der Übergangsfläche erfolgt. Aber auch dann, wenn die beiden Teile des Strömungsverteilers an dieser Fläche unmittelbar aneinander gelagert sind, werden durch die Nachführung unnötige Beanspruchungen verhindert. Dabei versteht es sich von selbst, daß die vom Strömungsverteiler nach außen führenden Anschlüsse - vorzugsweise als Schläuche - so verformbar zu gestalten sind, daß sie den geringen Taumelbewegungen folgen können.

Bei dieser Nachführung ist die Ausbildung der Schwenkeinstellbarkeit selbst ohne sonderliche Bedeutung. Beim Kardanlager sollten jedenfalls die undrehbaren Teile fest mit dem inneren Kardanring verbunden sein, wobei etwa eine am inneren Ende des Innenringes angeschlossenen Ringscheibe, insbesondere mittels sternförmig radial ausladender Anschlußarme, mit dem undrehbaren Teil des Strömungsverteilers verbunden wird.

Zwischen dem hinsichtlich seiner Ausbildung weniger bedeutsamen zweiten Drehlager und einer zylindrischen Außenfläche einer Trommelnabe kann eine zu dieser zentrische Torusfläche vorgesehen sein. Es versteht sich, daß man hier zwei Ringe vorsehen kann, wobei die Torusfläche die Form einer Kugel-Ringfläche hat, deren Mittelpunkt in der Achse der Trommelnabe liegt. Einfacher ist es jedoch, die am Innenteil des zweiten Drehlagers vorgesehene Torusfläche konvex nach innen zu wölben und die Zylinderfläche mit Neigungs-Umfangsspiel umgreifen zu lassen. Dadurch ergibt sich zwar im Prinzip nur eine punktförmige Auflage die sich unter der Last nur auf wenige mm Auflagefläche vergrößert, aber die einzige Relativbewegung dürfte bei

0119672

Betriebspausen in einer axialen Verschiebung von weniger als 1 mm bestehen. Dafür sind die hier vorhandenen Flächenpressungen ohne weiteres zulässig. Es bedarf auch keiner besonderen Maßnahmen, den Schiebewiderstand hier entsprechend klein zu halten, da vor allem in der Süßwarenherstellung die Luft stets solchen Feuchtigkeitsgehalt mit speziell schmierfähigen Bestandteilen enthält, daß Trockenreibung praktisch nicht zu überwinden ist.

Zwischen dem drehbaren Innenteil der zweiten Drehlagerung sollte jedoch eine Mitnahmeverbindung in Form eines etwa parallel zur Trommelachse verlaufenden Vorsprungs vorgesehen werden, der mit Längsspiel in einer Radialnut des anderen Teiles greift. Durch entsprechend gestaltete Kupplungsvorrichtungen kann im Prinzip auch sichergestellt werden, daß die Torusfläche selbst von radialen Kräften ganz entlastet wird.

Die Zeichnung gibt eine bevorzugte Ausführung der Erfindung wieder. Es zeigen

Fig. 1 eine teilweise geschnittene Seitenansicht einer erfindungsgemäßen Dragiervorrichtung,
Fig. 2 einen vergrößerten Schnitt durch diese Vorrichtung nach der Linie II-II in Fig. 1,
Fig. 3 einen wiederum vergrößerten Teilschnitt längs der Linie III-III in Fig. 2,
Fig. 4 eine Stirnansicht der Vorrichtung gemäß Pfeil IV von links in Fig. 1 gesehen,
Fig. 5 einen Teilschnitt längs der Linie V-V in Fig. 4,
Fig, 5a einen weiteren Teilschnitt nach der Schnittlinie in Fig. 5 und
Fig. 6 einen Schnitt nach der Linie VI-VI in Fig. 1 und
Fig. 7 eine Dichtungsausbildung für den Strömungsverteiler.
Die dargestellte Dragiervorrichtung besteht im wesentlichen aus einem Maschinenrahmen 1, der Dragiertrommel 2, einer

0119672

Antriebsvorrichtung 3, einem Strömungsverteiler 4 mit einem nicht weiter gezeigten Anschluß an ein Saug- und Druckgebläse, einer Auftragsvorrichtung, von welcher hier nur die Massezuführleitung 5 gezeigt ist, und einer die Trommel 2 auf dem Maschinenrahmen 1 umschließenden Gehäuse 6.

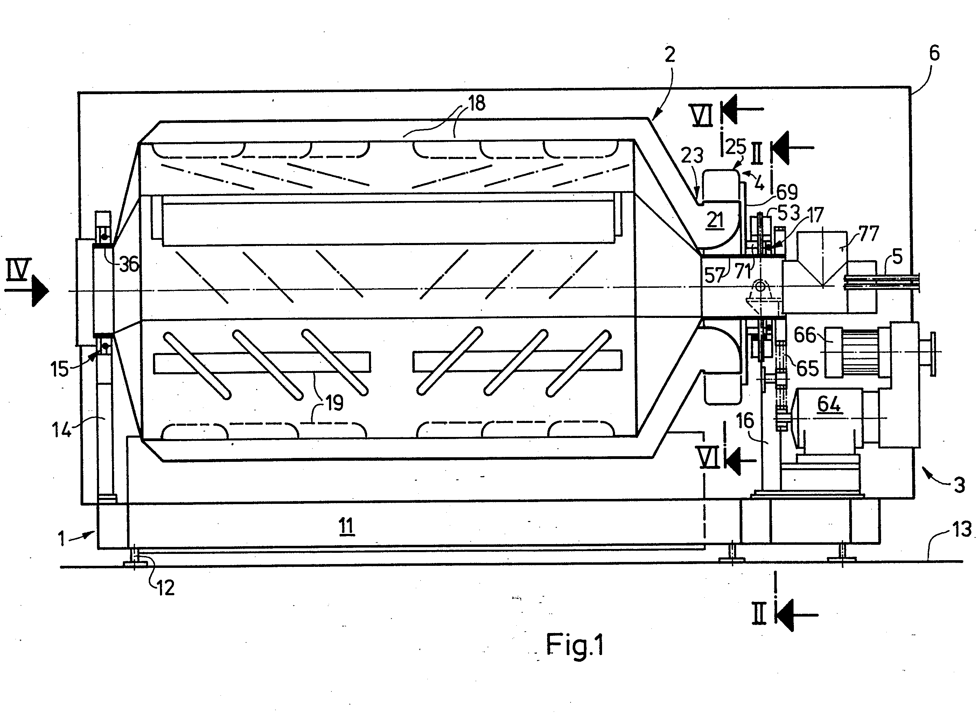

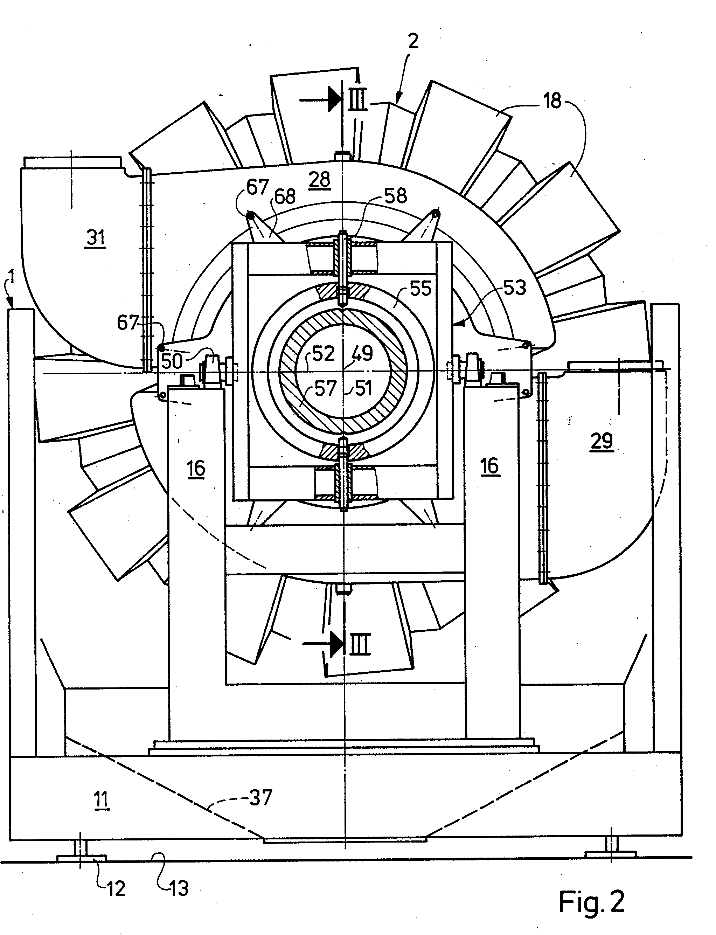

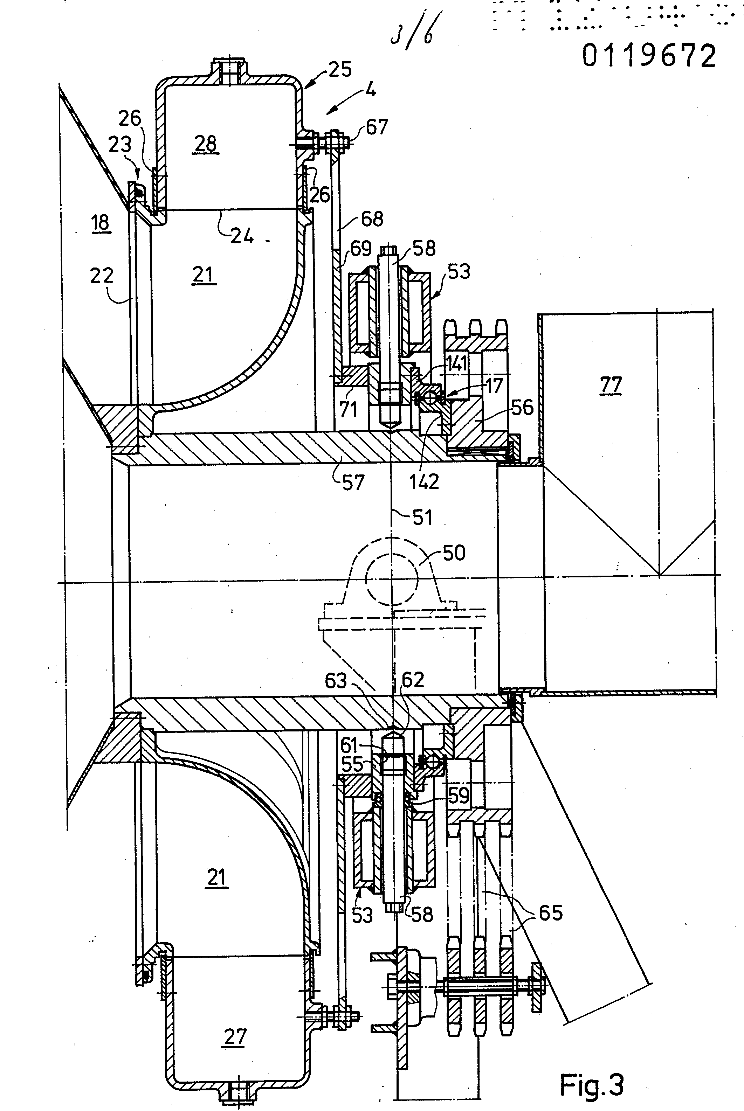

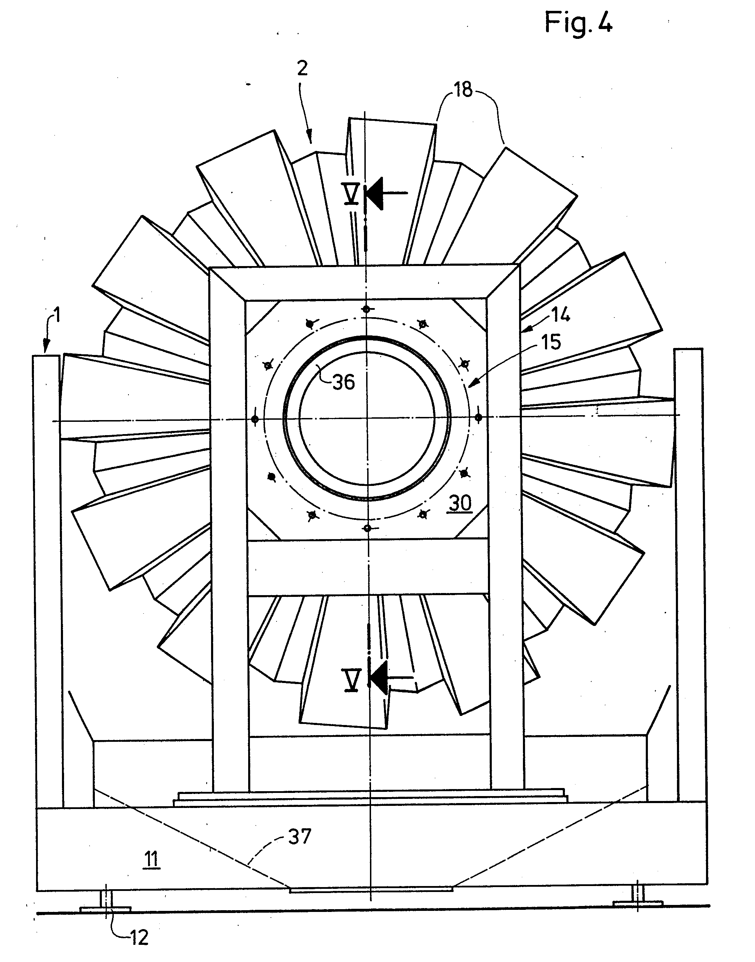

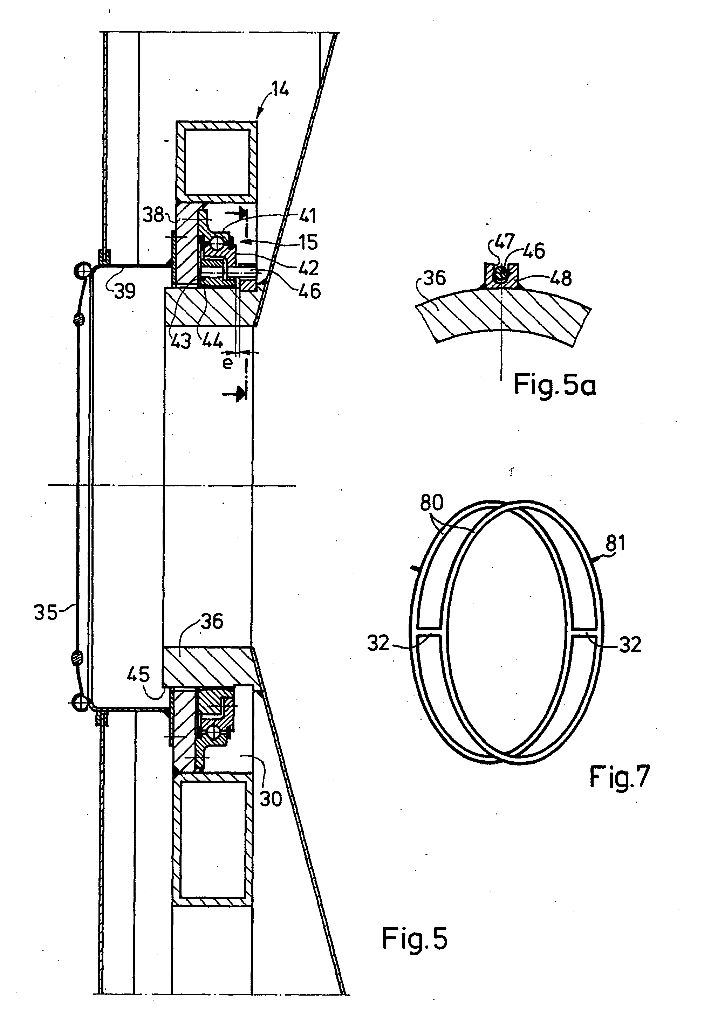

Hauptbestandteil des Maschinenrahmens 1 ist eine als Kasten-Hohlkonstuktion ausgebildete Grundplatte 11, die mittels in Höhenrichtung einstellbarer Füße 12 auf der Aufstellfläche 13 gehalten ist und mittels eines vorderen Lagerständers 14 in der aus den Fig. 4 und 5 zu ersehenden Weise ein Loslager 15 und mittels eines hinteren Lagerständers 16 ein Festlager 17 hält, wie dies im einzelnen in den Fig. 2 und 3 dargestellt ist. Im Prinzip entspricht die Dragiervorrichtung mit der Dragiertrommel 2 der Ausführung nach der deutschen Offenlegungsschrift 31 31 808. Während man dort jedoch eine Neuneektrommel verwendet hat, kommt hier eine Zwölfecktrommel zum Einsatz. Es sind demnach zwölf Leitkanäle 18 vorgesehen, die jeweils durch Luftdurchlässe 19 verschiedender Ausführung mit dem Trommelinnenraum in Verbindung und an ihrem rechten Ende in Fig. 1 mit jeweils einer Anschlußkammer 21 des an einen Stirnflansch 22 der Trommel angeflanschten und dieser gegenüber abgedichteten drehbaren Teiles 23 des Strömungsverteilers 4 angeschlossen sind.

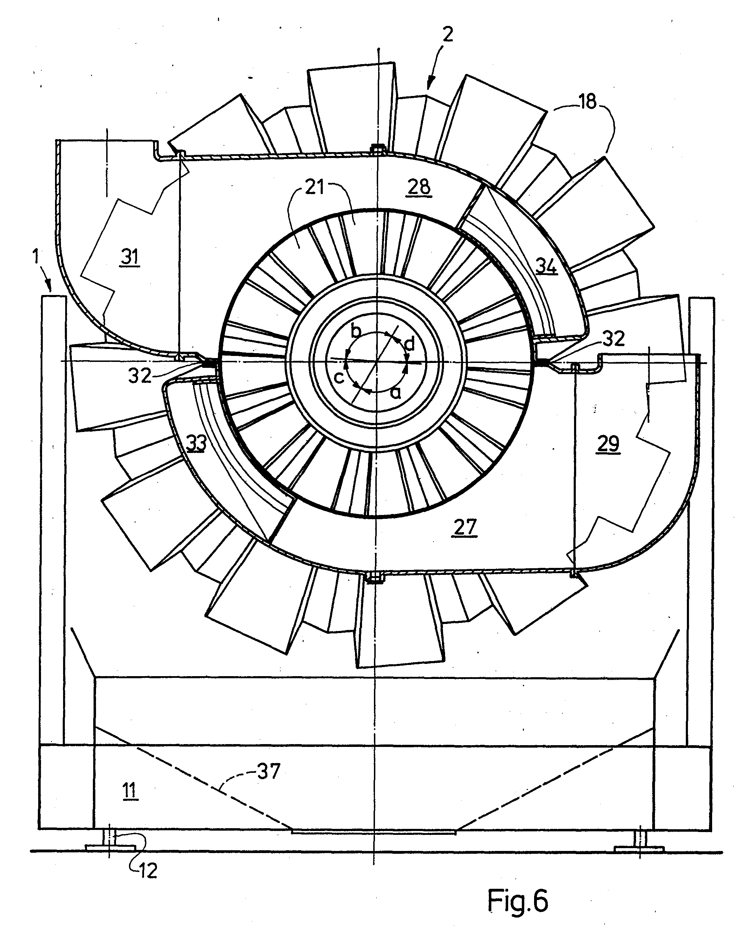

In einer zylindrischen Umfangsfläche 24 ist der drehbare Teil vom undrehbaren Teil 25 mittels seitlicher Dichtungssegmente 26 abgedichtet umgeben. Dieser undrehbare Teil setzt sich, wie vor allem aus Fig. 6 zu ersehen, aus einer unteren Segmentrinne 27 und einer oberen Segmentrinne 28 zusammen, die zwei Anschlußkrümmer 29, 31 aufweisen, einander gegenüberliegend sich jeweils über ca. 180° erstrecken und gegeneinander durch Streifendichtungen 32 abgeschirmt sind. Im Prinzip könnte daher auf dem halben Umfang eingeblasen und auf dem gegenüberliegenden halben Um-

- 9 -

0119672

fang abgeführt bzw. abgesaugt werden.

In beide Segmentrinnen sind jedoch auswechselbare Blenden 33, 34 eingebaut, mittels welcher der wirksame Anschlußwinkel a der unteren Segmentrinne 27 gegenüber dem Anschlußwinkel b der oberen Segmentrinne 28 auf Umfangsabstand im Winkel c bzw. d gehalten werden kann. Diese Abstände sind notwendig, damit der untere Anschlußwinkel a stets kleiner bleibt als der Auflagewinkel eines in der Dragiertrommel zu behandelnden Granulatbettes. Es ist jedoch verständlich, daß jede Kammer 21 etwa beim Umfang der Dragiertrommel im Uhrzeigersinn gemäß Fig. 6 im Bereich des Winkels c von der unteren Segmentrinne 27 abgetrennt wird, bevor sie im Bereich des Anschlußwinkels b mit der oberen Segmentrinne in Verbindung kommt. Je nach dem, welcher Anschlußkrümmer 29 oder 31 an Druck oder an Unterdruck angeschaltet ist, wird das Granulatbett von unten oder von oben durchströmt.

Die Dragiertrommel kann in bekannter Weise durch die mittels des Deckels 35 abgeschlossene Trommelnabe 36 hindurch oder auf andere Weise beschickt werden. Zum Entladen wird zweckmäßigerweise ein Wandungsteil ausgeklappt, so daß die ganze Trommelcharge in den fest oder bewegbar im Maschinenrahmen angebrachten Trichter 37 fallen kann.

Die Lagernabe 36 ist, wie vornehmlich Fig. 4 zeigt, von der Rahmenöffnung 30 des aus Vierkantrohren zusammengeschweißten Lagerständers 14 rings umschlossen. Diese Rahmenöffnung wird weitgehend ausgefüllt durch eine innen am Lagerständer 14 angebrachte Lagerplatte 38, die mittels eines Rohrstutzens 39 den Deckel 35 hält und an welcher der Außenring 41 des Loslagers 15 angeflanscht ist. Der Innenring 42 ist dagegen fest verschraubt mit einem Einstellring 43, der innen eine konvex gewölbte Torusfläche 44

0119672

bildet, an der sich mit einem eine Schrägstellung erlaubenden Umfangsspiel die äußere Zylinderfläche 45 der Trommelnabe 36 abstützt.

Zur drehschlüssigen Verbindung der Ringe 42 und 43 mit der Trommelnabe 36 dient dabei ein an oder zwischen beiden Ringen eingespannter Kupplungsstift 46, der axial nach rechts in Fig. 5 in eine Radialnut 47 eines Gabelstückes 48 vorragt, das mit axialem Abstand e zum Innenring 42 auf der Lagernabe 36 befestigt ist.

Damit kann sich das Trommelende mit seiner Nabe gegenüber dem fest am Lagerständer 14 angebrachten Loslager 15 axial frei bewegen und dank der Torusfläche 44 auch im begrenzten Maße zur Waagerechten schrägstellen.

Auf diese Weise wird das Loslager 15 von axialen Kräften ebenso wie von Randbelastungen durch Kippmomente völlig entlastet. Es überträgt praktisch nur rein radiale Kräfte, während die Axialkraft maximal den Wert der Reibung zwischen den Flächen 44 und 45 bei einer Wärmeausdehnung gegenüber dem Festlager 17 erreichen kann.

Auch der Lagerständer 16 für das Festlager 17 ist aus Vierkantrohren und damit biegesteif und verhältnismäßig starr ausgebildet. Dort ist jedoch das Lager nicht rahmenartig umschlossen, sondern die Ständerpfosten 161 enden mit Abstand unterhalb der Trommelachse 49 und tragen mittels zweier Schwenklager 50 in einer die Trommelachse 49 im wesentlichen rechtwinklig schneidenden waagerechten Achse 52 schwenkeinstellbar einen äußeren Kardanrahmen 53 der wiederum durch Rechteckrohre gebildet ist und in einer beide Achsen 49 und 52 rechtwinklig schneidenden zweiten, lotrechten Schwenkachse 51 einen inneren Kardanring 55 trägt. Dieser ist gemäß Fig. 3 fest mit dem Außenring 141 des

0119672

Festlagers 17 verbunden, das die gleiche Ausbildung hat wie das Loslager 15. Es ist dann auch der Innenring 142 fest mit einem Ketten-Antriebsrad 56 verbunden, das seinerseits fest auf der Trommelnabe 57 sitzt.

Zur Lagerung in der lotrechten Gelenkachse 51 dienen zwei jeweils durch Kardanrahmen 53 und Kardanring 55 hindurchgeführte Gelenkbolzen 58. Auf dem unteren Gelenkbolzen sitzt zudem ein kleines Kugellager 59, mit dem das vom Festlager aufgenommene Trommelgewicht vom Kardanring 55 auf den Kardanrahmen 53 übetragen wird. Beide Gelenkbolzen 58 sitzen jeweils mit ihrem Gewinde 61 im Kardanring 55 und können axial soweit verstellt werden, bis ihre Kegelspitze 62 in eine Ansenkung 63 der Lagernabe 57 greift und dadurch die Trommel im Maschinenrahmen drehschlüssig feststellt bzw. sie etwas anhebt. Auf diese Weise werden Montage und Demontage wesentlich erleichtert, da sich das Lager 17 durch Abstützen am Kardanring entlasten läßt. Man kann so ohne Einsatz eines besonderen Hebezuges das Lager 17 und das Ketten-Antriebsrad 56 austauschen.

Bei zurückgeschraubten Gelenkbolzen 58 ist die in dem nahezu ausschließlich radial beanspruchten Festlager 17 drehbare Trommelnabe 57 in axialer Richtung eindeutig durch die Abstützung über den Innenring 142, die Gelenkbolzen 58, den Kardanrahmen 53 und die Schwenklager 50 am Lagerständer 16 und damit am Maschinenrahmen festgelegt. Dadurch ist einerseits dem Festlager 17 und andererseits dem Loslager 15 jeweils ein Anschluß, mit allseitiger Einstellbarkeit zugeordnet, d. h. beide Trommelnaben 36 und 57 sind frei schwenkeinstellbar gehalten. Die Dragiertrommel 2 kann sich daher nahezu nach Belieben durchbiegen und entsprechend leicht gebaut sein.

Da das Kettenrad 56 dicht bei der Kardananordnung auf der Trommelnabe 57 aufgekeilt ist, ändern sich die Verhältnisse an der vom Getriebe 64 her geführte Kette 65 praktisch nicht, unabhängig davon, wie die Art der Antriebsvorrichtung mit dem Motor 66 beschaffen ist.

Der äußere, undrehbare Teil 25 des Strömungsverteilers 4 kann im Prinzip auf dem inneren Teil 23 drehbar gelagert werden, sofern er nur gegen Drehung abgestützt wird. Da jedoch hierfür zusätzlicher axialer Raum erforderlich wäre, ist dieser undrehbare Teil mittels einzelner Schrauben 67, ggf. mittels einzelner sternförmiger Arme 68, an einer Scheibe 69 befestigt, die über einen Zwischenring 71 wiederum fest mit dem Kardanring 55 verbunden wird. Damit wird der undrehbare Teil 25 des Strömungsverteilers dem drehbaren Teil 23 nachgeführt, wenn sich die Trommel durchbiegt und demgemäß die Trommelnabe 57 sich schrägstellt. Von Dichtungsmitteln wie den Dichtungsplatten abgesehen, brauchen sich also Innenteil und Außenteil nicht berühren, sie werden einander eben mit geringem Spielabstand zugeordnet.

Die Befestigung des aus den beiden Segmentrinnen 27 und 28 gebildeten drehbaren Teiles an einzelnen unter gleichbleibender Umfangsteilung vorgesehenen Schrauben 67 hat zudem den Vorteil, daß man den "undrehbaren Teil" 25 nach Belieben um die Trommelachse schwenken und ihn dadurch auf eine unterschiedliche Neigung der Oberfläche des in der Trommel behandelten Granulatbettes einstellen kann. Eine unmittelbare Befestigung der beiden Segmentrinnen aneinander ist nicht einmal notwendig. Es kann auch die Länge der Abdeckung durch die beiden Blenden 33, 34 entweder durch verstellbare Ausbildung dieser Blenden oder durch einen Blendenaustausch nach Bedarf geändert werden.

0119672

Der Innenraum der Dragiertrommel steht auch über das sich an die Trommelnabe 57 anschließende Winkel-Rohrstück 77 mit der Atmosphäre in Verbindung. Im Prinzip kann auch dieses Rohrstück zur Zuführung von unter Druck stehender Luft verwendet werden, wenn aus irgendwelchen Gründen der Strömungsweg nicht über die Segmentrinne 28 führen soll.

Da die Dichtungssegmente 26 und Streifendichtungen 32 stets die Anschlußöffnungen der Segmentrinnen 27,28 rings umschliessen und zudem diese Anschlußöffnungen in der zylindrischen Umfangsfläche 24 ineinander abschließen, sind einmal Saug- und Druckweg exakt voneinander getrennt, und es ist auch ein völliger Abschluß gegen Außenluft im Strömungsverteiler 4 gewährleistet. Es kann auch der Innenraum der Dragiertrommel 2 grundsätzlich gegenüber der Atmosphäre völlig abgeschlossen werden,so daß unmittelbar oder innerhalb des ringsumschließenden Gehäuses im Umluftbetrieb gearbeitet wird. Durch Drosselung im Strömungsweg des Winkel-Rohrstückes 77 kann auch der Abschlußgrad geändert werden.

Die Abdichtung selbst kann dabei noch vereinfacht werden, wenn nach Fig. 7 zwischen drehbaren und nicht drehbaren Teilen zwei Ringdichtungen in Form von Ringschläuchen 80 angebracht werden, die aus verhältnismäßig weichem, gummiartig verformbarem Material mit glatter, gleitförmiger Oberfläche bestehen. Diese Ringschläuche lassen sich nach Art von Fahrradschläuchen ausbilden und auch mit einem Ventil 81 versehen, um sich auf den jeweils gewünschten Innendruck aufblasen zu lassen. Die Streifendichtungen 32 können im Prinzip unverändert bleiben und die Segmentrinnen 27,28 gegenüber dem Innenraum der Trommelflächen gasdicht abschirmen. Auch diese Streifendichtungen lassen sich im Prinzip einstückig an die Ringschläuche 80 anformen.

0119672

1. März 1984/s

8 D 2776

DRIAM Metallprodukt GmbH & Co. KG
Aspenweg 19
D-7991 Eriskirch

Dragiervorrichtung mit Dragiertrommel


Ansprüche


1. Dragiervorrichtung zum Beschichten von Granulaten wie
Drageekerne mit einer vielschichtigen Umhüllung, mit
einer vorzugsweise um eine waagerechte Achse in zwei
axial zueinander versetzten Drehlagern gehaltenen Dragiertrommel, dadurch gekennzeichnet, daß wenigstens eines der
beiden Drehlager (15, 17) als in Form eines leichten Wälzlagers gestaltete Drehverbindung ausgebildet ist, die an
einen allseitig dreheinstellbaren Träger (43, 55) angeschlossen ist.


2. Dragiervorrichtung nach Anspruch 1, daß wenigstens das
als Festlager (17) eingesetzte Drehlager (17) mittels
zweier sich kreuzender Schwenkachsen (51, 52) kardanisch
aufgehängt ist.


3. Dragiervorrichtung nach Anspruch 2, dadurch gekennzeichnet, daß das kardanisch aufgehängte Drehlager (17)
dicht am Trommelantrieb (56, 3) angeordnet ist und das am
anderen Trommelende vorgesehene zweite Drehlager (15)
wenigstens einen nachgeschalteten Anschlußteil (43) aufweist, demgegenüber das Trommelende allseitig schwenkeinstellbar und längsverschiebbar gehalten ist.

0119672

4. Dragiervorrichtung nach Anspruch 2 oder 3, dadurch gekennzeichnet, daß die kardanische Aufhängung einen äußeren Kardanrahmen (53) aufweist, der über zwei gleichachsige Gelenkzapfen um eine erste Schwenkachse (52) in einem ortsfesten Träger gehalten ist und um eine zur ersten senkrechte zweite Schwenkachse (51) schwenkeinstellbar einen inneren Kardanring (55) trägt, der mit dem äußeren Wälzlagerring (141) verbunden ist.

5. Dragiervorrichtung nach Anspruch 4, gekennzeichnet durch zwischen dem inneren Kardanring (55) und der Dragiertrommel (2) vorgesehene Stütz- bzw. Kupplungsmittel (62, 63) zum unmittelbaren Abstützen bzw. Feststellen der Trommel in ihrer Drehlage.

6. Dragiervorrichtung nach Anspruch 5, dadurch gekennzeichnet, daß in der zweiten (inneren) Schwenkachse (52) wenigstens ein den äußeren Kardanrahmen (53) und den inneren Kardanring (55) durchsetzender Gelenkbolzen (58) bis zum Eingriff in eine Kupplungsaussparung (63) an der Trommelnabe (57) radial verstellbar vorgesehen ist.

7. Dragiervorrichtung nach Anspruch 6, dadurch gekennzeichnet, daß der in der lotrechten Gelenkachse (51) unten vorgesehene Gelenkbolzen (58) mit Gewindeeingriff zentriert im inneren Kardanring (55) gehalten ist.

8. Dragiervorrichtung nach einem der Ansprüche 1 bis 7, mit einem Strömungsverteiler für Trocknungsluft durch eine Übergangsfläche zwischen an der Trommel vorgesehenen Strömungskanälen (18) und gehäusefesten Anschlüssen (27, 28), dadurch gekennzeichnet, daß die undrehbar angeordneten Teile (23) des Strömungsverteilers wenigstens mittelbar in der Übergangsfläche (28) zur Trommel (2) dieser gegenüber selbsttätig einstellbar geführt sind.

0119672

9. Dragiervorrichtung nach Anspruch 8, dadurch gekennzeichnet, daß die undrehbaren Teile (23) des Strömungsverteilers (4) an dem undrehbaren, selbstätig zur Trommel (2) einstellbaren Teil (141, 55) eines Trommellagers, insbesondere des Festlagers (17), angeschlossen sind.

10. Dragiervorrichtung nach Anspruch 9, dadurch gekennzeichnet, daß die undrehbaren Teile (23) des Strömungsverteilers (4) fest mit dem inneren Kardanring (55) verbunden sind.

11. Dragiervorrichtung nach Anspruch 10, dadurch gekennzeichnet, daß eine am inneren Ende des Kardanringes angeschlossene Ringscheibe (69), insbesondere mittels sternförmig radial ausladender Anschlußarme (69) mit den undrehbaren Teilen (23) des Strömungsverteilers (4) verbunden ist.

12. Dragiervorrichtung nach Anspruch 3, dadurch gekennzeichnet, daß zwischen dem zweiten Drehlager (15) und einer zylindrischen Außenfläche (45) einer Trommelnabe (36) eine zu dieser zentrische Torusfläche (44) vorgesehen ist.

13. Dragiervorrichtung nach Anspruch 12, dadurch gekennzeichnet, daß die am Innenteil (42) des zweiten Drehlagers (15) vorgesehene Torusfläche (44) konvex nach innen gewölbt ist und die Zylinderfläche (45) mit Neigungs-Umfangsspiel umgreift.

14. Dragiervorrichtung nach Anspruch 3, 12 oder 13, dadurch gekennzeichnet, daß zwischen dem drehbaren Innenteil (42) der zweiten Drehlagerung (15) eine Mitnahmeverbindung in Form eines etwa parallel zur Trommelachse verlaufenden Vorsprunges (46) vorgesehen ist, der mit Längsspiel in eine Radialnut (47) des anderen Teiles (48, 36) eingreift.

- 17 -

0119672

15. Dragiervorrichtung nach einem der Ansprüche 8 bis 14, dadurch gekennzeichnet, daß zwischen dem drehbaren Teil (26) und dem undrehbaren Teil (25) des Strömungsverteilers (4) eine Umfangsfläche (24) zentrisch umschließend zwei seitliche Ringdichtungen vorgesehen sind, zwischen welchen insbesondere Streifendichtungen(33)erstreckt sind.

16. Dragiervorrichtung nach Anspruch 14 oder 15, gekennzeichnet durch die Ausbildung der Ringdichtungen als Ringschläuche(80) aus gummiartig verformbarem Werkstoff mit gleitgünstiger Oberfläche.

17. Dragiervorrichtung nach Anspruch 16, dadurch gekennzeichnet, daß die Ringschläuche(80)mit einem Rückschlagfüllventil und auf einen frei wählbaren Druck aufblasbar ausgebildet sind.

Fig.1

0119672

8 D 2686/2776

Fig. 2

8 D 2686/2776

Fig.3

0119672

Fig. 4

0119672

Fig.5a

Fig.7

Fig.5

0119672

Fig.6

0119672

**EUROPÄISCHER RECHERCHENBERICHT**

Nummer der Anmeldung

EP  84 20 0451

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A- 788 167 (FONDERIE NOUVELLE) <br> * Seite 1, Zeilen 53-54; Zusammenfassung; Figuren * | 1,2,4 | A 23 G 3/26 <br> F 16 C 13/02 <br> F 16 C 23/08 |
| Y | FR-A- 963 049 (R. LANCELIN) <br> * Zusammenfassung; Abbildungen 1-3; Seite 1, Zeilen 20-25 * | 1,2,4 | |
| Y | DE-A-2 212 985 (SAUTER M.) <br> * Figur 1; Seite 5, Zeile 11 - Seite 9, Zeile 3 * | 1,8,15 | |
| Y | DE-A-3 131 808 (DRIAM METALLPRODUKT) <br> * Figuren 2,3 * | 1,3,8, 15 | |
| Y,D | FR-A-2 416 740 (DRIAM METALLPRODUKT) <br> * Figuren 9,2; Seite 7, Zeile 30 * | 1,3,8, 15 | RECHERCHIERTE SACHGEBIETE (Int. Cl. ³) <br><br> A 23 G <br> B 01 J <br> F 16 C |
| Y | FR-A-1 309 022 (SIEMAG SIEGENER MASCHINENBAU) <br> * Figur 1; Zusammenfassung * | 3 | |
| A | US-A-3 923 349 (P.T. HERBST) | | |
| A | US-A-2 734 406 (J.M. O'MALLEY) | | |

Der vorliegende Recherchenbericht wurde für alle Patentansprüche erstellt.

| Recherchenort <br> DEN HAAG | Abschlußdatum der Recherche <br> 22-06-1984 | Prüfer <br> GUYON R.H. |
|---|---|---|